# FASCICULE DE BREVET EUROPEEN

(11) **EP 4 434 105 B1**
(45) Date de publication et mention de la délivrance du brevet: **31.12.2025**
(21) Numéro de dépôt: 22817563.4
(22) Date de dépôt: 10.11.2022
(51) Int. Cl.: H01M 8/0226, H01M 8/0221, H01M 8/0213, C25B 9/60, B29C 65/24, H01M 8/10, C25B 9/65, C25B 9/77, C25B 11/00, H01M 8/0228, H01M 8/0297, C25B 9/75

(54) **SYSTÈME ET PROCÉDLÉ DE SOLIDARISATION DE PLAQUES BIPOLAIRES EN MATÉRIAU COMPOSITE D'UN DISPOSITIF ÉLECTROCHIMIQUE**
SYSTEM UND VERFAHREN ZUM ZUSAMMENFÜGEN VON BIPOLARPLATTEN AUS VERBUNDMATERIAL EINER ELECTROCHEMISCHEN VORRICHTUNG
SYSTEM AND METHOD FOR JOINING BIPOLAR PLATES MADE OF COMPOSITE MATERIAL OF AN ELECTROCHEMICAL DEVICE

(30) Priorité: 16.11.2021 FR 2112109
(43) Date de publication de la demande: 25.09.2024
(73) Titulaire: Hycco, 31400 Toulouse (FR)
(72) Inventeur: DI COSTANZO, Romain, 31400 TOULOUSE (FR); FONTAINE, Alain, 31200 TOULOUSE (FR)
(74) Mandataire: Argyma
(86) Numéro de dépôt international: PCT/EP2022/081377
(87) Numéro de publication internationale: WO 2023/088759

(56) Documents cités:
- EP-A1- 2 070 143
- EP-A1- 2 717 369
- EP-B1- 2 070 143
- DE-A1- 102019 203 884
- FR-A1- 3 110 777

## Description

### Domaine technique

La présente invention concerne le domaine des dispositifs électrochimiques et vise en particulier un système et un procédé de solidarisation de plaques bipolaires en matériau composite d'un dispositif électrochimique.

On désigne par dispositif électrochimique tout dispositif permettant de mettre en œuvre une réaction électrochimique, tel qu'une pile à combustible ou un électrolyseur membranaire à échange de protons, permettant de générer respectivement de l'énergie électrique ou de l'hydrogène à partir d'une réaction d'oxydoréduction. Le terme « dispositif électrochimique » désigne également une batterie à flux d'oxydo-réduction permettant de générer de l'énergie électrique à partir d'énergie potentielle stockée dans la batterie.

De manière connue, un dispositif électrochimique comprend un empilement d'une pluralité de cellules s'étendant selon un axe d'empilement et deux plaques terminales, placées aux extrémités de l'empilement. Les plaques terminales sont reliées par des organes de compression qui permettent de comprimer les cellules et d'assurer l'étanchéité du dispositif électrochimique.

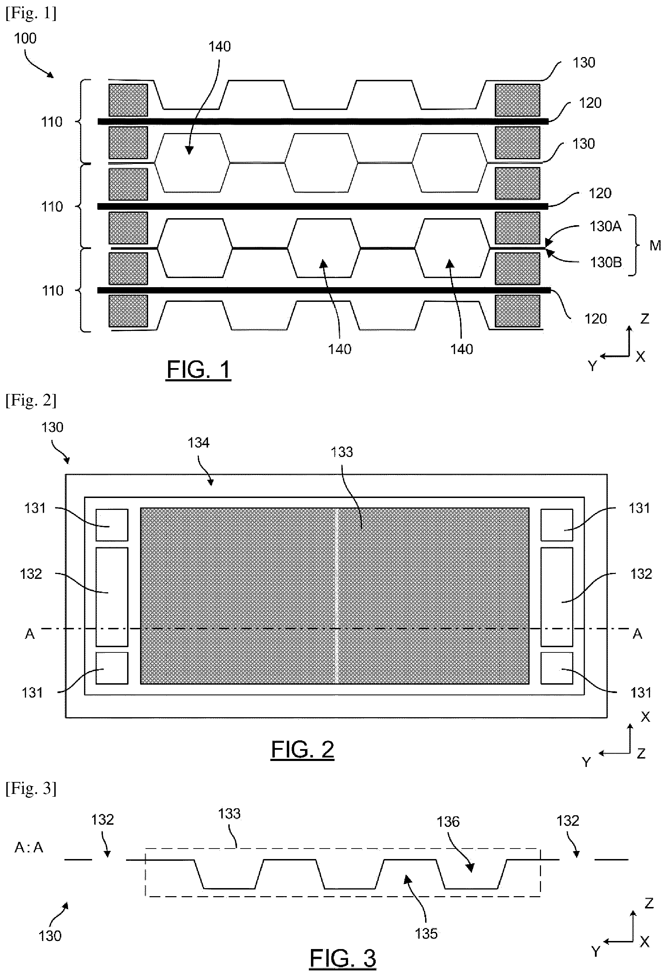

En référence à la [Fig.1], chaque cellule 110 comprend un assemblage membrane-électrodes 120 et deux plaques bipolaires 130, également appelées plaques séparatrices, qui prennent en sandwich l'assemblage membrane-électrodes 120 et permettent la distribution de fluides dans la cellule 110. Pour former la réaction électrochimique dans le dispositif électrochimique, chaque cellule 110 est, de manière connue, alimentée par un fluide oxydant et un fluide réducteur, par exemple du di-hydrogène et du dioxygène, qui réagissent lorsqu'ils sont mis en contact dans une réaction d'oxydo-réduction. Chaque cellule 110 est également alimentée en fluide caloporteur, utilisé pour la régulation thermique du dispositif électrochimique.

En pratique, deux plaques bipolaires 130A, 130B adjacentes de deux cellules 110 adjacentes sont solidarisées ensemble de manière à former un module bipolaire M définissant plusieurs canaux internes 140 qui permettent le passage du fluide caloporteur entre les cellules 110.

La présente invention concerne les plaques bipolaires formées en matériau composite et non les plaques bipolaires formées en graphite qui sont lourdes et présentent un encombrement important dans le dispositif électrochimique.

De manière connue, une plaque bipolaire en matériau composite comprend des particules électriquement conductrices, généralement des particules de carbone, dispersées dans une résine polymère.

En référence aux figures 2 et 3, une telle plaque bipolaire 130 comprend de manière connue une pluralité d'ouvertures 131, qui permettent l'entrée et la sortie des fluides oxydant et réducteur, et deux ouvertures d'entrée et de sortie 132 du fluide caloporteur. Chaque plaque bipolaire 130 comprend en outre une portion centrale 133, en contact avec l'assemblage membrane-électrodes 120 et sur laquelle se produit la réaction d'oxydoréduction, grâce aux particules conductrices. La portion centrale 133 comprend des portions concaves 135 et des portions convexes 136 (représentées sur la [Fig.3]) permettant la circulation des fluides entre les différentes ouvertures d'entrée/sortie 131, 132. De manière connue, les portions concaves 135 de plaques bipolaires 130 sont solidarisées ensemble de manière à ce que les portions convexes 136 forment les canaux internes 140 d'un module bipolaire M. Chaque plaque bipolaire 130 comprend également une portion périphérique 134 (représentée sur la [Fig.2]) permettant la solidarisation des deux plaques bipolaires 130 pour former le module bipolaire M.

De manière connue, la liaison de deux plaques bipolaires en composite est réalisée par l'ajout d'un joint élastomère appliqué sur la zone périphérique des plaques bipolaires, ce qui est long et complexe à mettre en œuvre. Les cadences de production sont alors faibles.

On connait en outre un procédé d'assemblage de panneaux composites par soudage résistif. Un tel soudage est réalisé au moyen d'un outil de soudage qui fait fondre progressivement la matière à mesure qu'il se déplace le long des bordures des panneaux pour former un cordon de soudure. Cependant, un tel procédé n'est pas applicable sur une plaque bipolaire en composite telle que décrite précédemment, du fait notamment de sa composition. En effet, une plaque bipolaire comprenant des particules conductrices dispersées dans une résine polymère ne peut être fondue sans que les particules conductrices ne soient entrainées par la résine fondue, ce qui peut affecter sa conductivité. De plus, un tel procédé par soudage est long à mettre en œuvre parce qu'il nécessite le déplacement régulier d'un outil de soudage sur tout le pourtour du panneau composite.

Dans l'art antérieur, tel que représenté par EP 2070143 A1, on connaît une plaque bipolaire en matériau composite comprenant des particules conductrices dispersées dans une résine. Pour assurer une conductivité importante, il est nécessaire d'intégrer un grand nombre de particules conductrices. Lors de la formation d'une telle plaque bipolaire, la résine à l'état visqueux est mélangée à un nombre très important de particules conductrices, ce qui rend le mélange épais et ne permet pas la formation de plaques bipolaires fines. Aussi, une plaque bipolaire formée de particules conductrices présente une épaisseur importante, comprise généralement entre 3 et 5 mm, ce qui augmente l'encombrement et la masse du dispositif électrochimique. Cela est pénalisant pour un dispositif électrochimique destiné à être intégré par exemple dans un aéronef ou dans tout autre véhicule.

Aussi, il est connu une plaque bipolaire en matériau composite comprenant des fibres de renfort (par exemple des fibres de carbone) imprégnées de résine polymère thermoplastique ou thermodurcissable formant une matrice. Une telle plaque bipolaire présente l'avantage d'être plus fine, d'épaisseur inférieure à un millimètre, ce qui permet de limiter son encombrement et sa masse.

Afin de solidariser deux plaques bipolaires réalisées dans un tel matériau, il est nécessaire d'ajouter une surépaisseur de résine polymère sur la portion périphérique de chaque plaque bipolaire de manière à permettre par exemple un soudage par la fonte et le mélange des résines polymères des deux plaques bipolaires tout en conservant les propriétés de conductivité de chaque plaque bipolaire sur la portion centrale active. Cependant l'ajout de résine polymère sur la portion périphérique rend plus complexe le processus de fabrication de chaque plaque bipolaire puisqu'il nécessite la définition de deux états de surface distincts. Aussi la fabrication d'une plaque bipolaire comprenant des fibres de renfort imprégnées de résine polymère thermoplastique en vue de leur soudage est long et complexe à mettre en œuvre.

Il est également connu d'assembler deux plaques bipolaires par collage. Cependant, la colle peut créer une résistance électrique superficielle au niveau de la zone de collage. De plus, certains polymères thermoplastiques fluorés, très stables chimiquement et particulièrement adaptés aux dispositifs électrochimiques (comme le Polyvinylidene fluoride ou le Teflon^{®} par exemple), sont chimiquement incompatibles avec la plupart des colles, qui ne peuvent pas créer de liaison optimale avec le polymère thermoplastique. Il peut alors être nécessaire d'utiliser une activation plasma des matériaux, et/ou de développer une colle particulière afin de pouvoir assembler les plaques bipolaires par collage. Une telle mise en œuvre est complexe et nécessite un procédé long et coûteux, ce qui n'est pas souhaitable.

L'invention vise ainsi à éliminer au moins certains de ces inconvénients en proposant un système et un procédé de solidarisation de deux plaques bipolaires simple et sans ajout de matière, permettant la solidarisation rapide de deux plaques bipolaires sans impacter leurs propriétés mécaniques et leur perméabilité aux fluides.

### PRESENTATION DE L'INVENTION

L'invention concerne un système de solidarisation d'une première plaque bipolaire et d'une deuxième plaque bipolaire de manière à former un module bipolaire d'un dispositif électrochimique, le dispositif électrochimique étant configuré pour mettre en œuvre une réaction électrochimique, chaque plaque bipolaire étant réalisée dans un matériau composite comprenant des fibres de renfort conductrices imprégnées dans une résine polymère, chaque plaque bipolaire comprenant :
- une portion centrale, électriquement conductrice, destinée à réaliser des échanges dans le dispositif électrochimique, et
- une portion périphérique, électriquement conductrice, s'étendant extérieurement à la portion centrale.

Le système de solidarisation comprend :
- un premier dispositif d'assemblage configuré pour être en contact avec la première plaque bipolaire, et
- un deuxième dispositif d'assemblage configuré pour être en contact avec la deuxième plaque bipolaire.

Le premier dispositif d'assemblage comprend un organe de chauffage ayant une forme périphérique et configuré pour réaliser un chauffage selon une zone de chauffage périphérique sur la portion périphérique de la première plaque bipolaire de manière à faire fondre la matrice pour solidariser la première plaque bipolaire avec la deuxième plaque bipolaire et former un cordon de soudage périphérique s'étendant extérieurement à la portion centrale et étant strictement inclus dans la portion périphérique de la première plaque bipolaire.

Le système de solidarisation selon l'invention permet avantageusement de solidariser deux plaques bipolaires en matériau composite et permet un chauffage local uniquement dans la portion périphérique de chaque plaque bipolaire, permettant une refonte partielle de résine polymère de chaque portion périphérique de chaque plaque bipolaire, sans endommager la portion centrale de chacune. Les échanges dans le dispositif électrochimique ne sont ainsi pas impactés.

Une zone de chauffage périphérique permet de souder instantanément toute la périphérie des plaques bipolaires sans nécessiter le déplacement d'un outil, ce qui représente un gain de temps important. Grâce au système selon l'invention, la solidarisation de deux plaques bipolaires est plus rapide et plus fiable.

Un tel système de solidarisation permet également de s'affranchir de l'ajout de matière supplémentaire lors de la formation du module bipolaire, ce qui représente un gain de temps important et limite le nombre d'étapes nécessaires à la formation du module bipolaire.

Le système de solidarisation selon l'invention permet avantageusement de solidariser deux plaques bipolaires sans que celles-ci ne nécessitent deux états de surface distincts sur la portion périphérique et sur la portion centrale. Grâce à l'invention, chaque plaque bipolaire présente un unique état de surface, ce qui simplifie en amont le processus de fabrication des plaques bipolaires et permet un gain de temps important.

De manière préférée, chaque plaque bipolaire comprend des fibres de carbone imprégnées dans une résine thermoplastique.

Grâce à l'invention, même dans le cas de plaques bipolaires comprenant des fibres de carbone imprégnées dans une résine thermoplastique, il n'est pas nécessaire d'ajouter une couche résiduelle de résine thermoplastique sur la portion périphérique, comme cela était le cas dans l'art antérieur. Le système de solidarisation permet de solidariser deux plaques bipolaires en faisant fondre la résine thermoplastique directement présente dans une portion conductrice sans que la conductivité de la portion centrale ne soit affectée. La résine thermoplastique contenue dans la plaque bipolaire est suffisante pour permettre la solidarisation des deux plaques bipolaires.

De manière préférée, la portion centrale et la portion périphérique présentent sensiblement une même épaisseur.

De préférence, chaque plaque bipolaire présente une épaisseur inférieure à 1mm. Le système selon l'invention permet la solidarisation de deux plaques bipolaires d'épaisseur très fine pour lesquelles il n'existe pas à ce jour de procédé d'assemblage fiable qui permette de conserver les caractéristiques mécaniques de telles plaques bipolaires.

Dans une forme de réalisation préférée, le premier dispositif d'assemblage comprend un organe de pression configuré pour appliquer un premier effort de pression selon une zone de pression au moins sur une partie de la portion périphérique de la première plaque bipolaire de manière à comprimer la première plaque bipolaire et la deuxième plaque bipolaire entre le premier dispositif d'assemblage et le deuxième dispositif d'assemblage, l'organe de chauffage étant monté sur l'organe de pression, la zone de chauffage étant au voisinage de la zone de pression. Le système de solidarisation permet ainsi avantageusement de maintenir immobiles les deux plaques bipolaires sur toute leur périphérie, tout en assurant un chauffage local. De plus une pression sur toute la périphérie des plaques bipolaires permet de limiter les risques que les plaques ne bougent pendant l'opération de chauffage, ce qui pourrait entrainer un cordon de soudage irrégulier.

Dans une forme de réalisation, l'organe de pression présentant une forme parallélépipédique, la zone de pression s'étend à la fois sur la portion centrale et sur une partie de la portion périphérique de la première plaque bipolaire, et la zone de chauffage périphérique s'étend sur la portion périphérique de la première plaque bipolaire extérieurement à la zone de pression.

Dans une forme de réalisation alternative, l'organe de pression présentant une forme périphérique, la zone de pression s'étend de manière périphérique uniquement sur la portion périphérique de la première plaque bipolaire. Une zone de pression périphérique permet de limiter l'endommagement de la portion centrale de chaque plaque bipolaire.

Dans une forme de réalisation, la zone de chauffage s'étend sur la portion périphérique de la première plaque bipolaire extérieurement à la zone de pression périphérique.

De manière alternative, la zone de chauffage s'étend sur la portion périphérique de la première plaque bipolaire intérieurement à la zone de pression.

De manière préférée, l'organe de pression présentant une forme périphérique, la zone de pression s'étend de manière périphérique uniquement sur la portion périphérique de la première plaque bipolaire et la zone de chauffage périphérique est strictement incluse dans la zone de pression périphérique. Une telle forme de réalisation permet avantageusement d'appliquer l'organe de pression sur la portion périphérique de la première plaque bipolaire de part et d'autre de l'organe de chauffage, ce qui permet de s'assurer du maintien en place des deux plaques bipolaires l'une par rapport à l'autre. L'organe de pression englobant l'organe de chauffage, permet de répartir une pression de part et d'autre du cordon de soudure. Ainsi, les caractéristiques mécaniques de la portion périphérique de chaque plaque bipolaire sont conservées au plus proche de la portion centrale et sur les bordures extérieures de la plaque bipolaire.

Selon une forme de réalisation préférée, l'organe de pression du premier dispositif d'assemblage comprenant une cavité intérieure, l'organe de chauffage du premier dispositif d'assemblage est monté dans la cavité intérieure de l'organe de pression. Un tel montage de l'organe de chauffage permet de s'assurer que la zone de chauffage se trouve incluse dans la zone de pression, permettant de s'assurer du positionnement du cordon de soudure.

Dans une première forme de réalisation, l'organe de chauffage est fixe par rapport à l'organe de pression, permettant un dispositif d'assemblage simple à réaliser et à utiliser. Dans le cas d'un ensemble (formé par l'organe de chauffage et l'organe de pression) monobloc, le premier dispositif d'assemblage peut être commandé simplement, sans nécessiter le contrôle indépendant de l'un ou de l'autre organe. Le procédé est également plus rapide parce qu'il ne nécessite pas le déplacement successif de l'organe de pression et de l'organe de chauffage.

Dans une deuxième forme de réalisation, l'organe de chauffage est monté coulissant dans la cavité intérieure de l'organe de pression. Une telle forme de réalisation permet d'appliquer l'effort de pression sur les deux plaques bipolaires avant de chauffer les portions périphériques des deux plaques bipolaires, permettant de s'assurer du positionnement des plaques vis-à-vis de l'organe de chauffage.

Dans une forme de réalisation, l'organe de chauffage étant configuré pour venir en contact de la première plaque bipolaire, l'organe de chauffage comprend un dispositif de positionnement configuré pour venir en butée contre l'organe de pression de manière à définir précisément la position de l'organe de chauffage. Un tel dispositif de positionnement permet avantageusement de contrôler la position de l'organe de chauffage par rapport à la première plaque bipolaire.

De préférence, l'organe de chauffage comprenant une tête de soudage, la tête de soudage présente une section inférieure ou égale à 10mm, permettant de faire fondre une quantité suffisante de résine polymère, de manière à s'assurer d'une surface de soudage suffisante pour solidariser les deux plaques bipolaires, tout en limitant les dimensions du cordon de soudage.

De préférence, la section de la tête de soudage est inférieure ou égale à 5mm.

Selon une forme de réalisation, la résine polymère du matériau composite présentant une température de fusion, l'organe de chauffage est configuré pour chauffer à une température comprise entre la température de fusion de la résine polymère et la température de fusion augmentée de 40°C. Une telle température permet avantageusement de faire fondre localement la résine polymère de la première plaque bipolaire.

De manière préférée, l'organe de pression, présentant une température de fonctionnement, est configuré pour maintenir la température de fonctionnement inférieure ou égale à la température de fusion de la résine polymère réduite de 20°C, de manière à limiter le transfert de chaleur entre l'organe de chauffage et l'organe de pression. Ainsi la matrice polymère ne fond pas au contact de l'organe de pression.

De préférence, l'organe de pression est configuré pour maintenir la température de fonctionnement à la température ambiante.

Dans une première forme de réalisation, l'organe de pression est réalisé dans un matériau thermiquement non conducteur, permettant de limiter les transferts de chaleur tout en s'affranchissant de l'ajout d'un dispositif supplémentaire.

Dans une deuxième forme de réalisation, l'organe de pression comprend un dispositif de refroidissement configuré pour maintenir la température de fonctionnement inférieure à un seuil prédéterminé. Un tel dispositif de refroidissement permet de fabriquer l'organe de pression dans tout matériau tout en s'assurant de limiter la température de fonctionnement de l'organe de pression.

Dans une forme de réalisation, le premier dispositif d'assemblage comprend un organe de refroidissement, configuré pour permettre la circulation d'un fluide caloporteur au moins autour de l'organe de chauffage, permettant d'abaisser la température de l'organe de chauffage.

De manière préférée, au moins l'organe de chauffage est configuré pour appliquer un deuxième effort de pression compris entre 1 et 15MPa selon la zone de chauffage périphérique. Un tel effort de pression permet de garantir le maintien des deux plaques bipolaires, sans risquer de déformer les plaques bipolaires solidarisées et sans risquer de déplacer la résine polymère dans une zone en dehors de la portion de soudage. Ainsi le système de solidarisation permet de garantir le positionnement de la zone de chauffage sur la portion périphérique de chaque plaque bipolaire pendant toute la durée du procédé de solidarisation. Un tel effort de pression permet en outre une bonne diffusion thermique sans endommager les fibres de carbone des plaques bipolaires.

Dans une forme de réalisation, l'organe de chauffage et l'organe de pression sont configurés pour appliquer le deuxième effort de pression selon la zone de chauffage et la zone de pression périphériques.

Dans une forme de réalisation préférée de l'invention, la première plaque bipolaire étant soumise à un effort de pression de mise en œuvre lors de sa fabrication, le premier effort de pression appliqué par l'organe de pression est inférieur ou égal à l'effort de pression de mise en œuvre, permettant avantageusement de limiter l'endommagement de l'assemblage composite.

Dans une première forme de réalisation, le deuxième dispositif d'assemblage se présente sous la forme d'un support, configuré pour soutenir la première plaque bipolaire et la deuxième plaque bipolaire. Le deuxième dispositif d'assemblage est configuré pour résister à la pression appliquée par le premier dispositif d'assemblage. Un tel deuxième dispositif d'assemblage permet un système de solidarisation simple à réaliser et à utiliser parce qu'il ne nécessite pas la coordination de deux organes de pression et deux organes de chauffage lors d'un procédé de solidarisation.

Dans une deuxième forme de réalisation, le deuxième dispositif d'assemblage comprend un organe de chauffage ayant une forme périphérique, l'organe de chauffage étant configuré pour réaliser un chauffage selon une zone de chauffage périphérique sur la portion périphérique de la deuxième plaque bipolaire de manière à faire fondre la matrice de la deuxième plaque bipolaire et former un cordon de soudage périphérique s'étendant extérieurement à la portion centrale et étant strictement inclus dans la portion périphérique de la deuxième plaque bipolaire.

Deux dispositifs d'assemblage similaires montés en vis-à-vis l'un de l'autre permettent de réduire les temps de chauffe, ce qui permet avantageusement de limiter la diffusion thermique dans les plaques bipolaires et ainsi de limiter les risques de déconsolidation du matériau composite. Une telle configuration permet en outre de chauffer les deux plaques bipolaires de manière symétrique. Ainsi des propriétés mécaniques similaires sont conservées sur les deux plaques bipolaires.

Dans une forme de réalisation, le deuxième dispositif d'assemblage comprend un organe de pression configuré pour appliquer un premier effort de pression selon une zone de pression au moins sur une partie de la portion périphérique de la deuxième plaque bipolaire, de manière à comprimer la première plaque bipolaire et la deuxième plaque bipolaire entre le premier dispositif d'assemblage et le deuxième dispositif d'assemblage, l'organe de chauffage étant monté sur l'organe de pression, la zone de chauffage étant au voisinage de la zone de pression.

De préférence, le premier effort de pression appliqué par l'organe de pression du premier dispositif d'assemblage est identique au premier effort de pression appliqué par l'organe de pression du deuxième dispositif d'assemblage.

Dans une forme de réalisation, l'épaisseur de l'organe de pression du premier dispositif d'assemblage est de préférence comprise entre 10 et 100 mm, permettant de s'assurer que l'organe de pression applique un effort de pression selon une zone de pression suffisante pour maintenir les plaques bipolaires en compression. Grâce à une telle épaisseur, l'organe de pression n'applique le premier effort de pression que sur la portion périphérique de la première plaque bipolaire, ce qui permet de préserver la portion centrale de tout effort qui serait susceptible de l'endommager.

L'invention concerne également un procédé de solidarisation d'une première plaque bipolaire et d'une deuxième plaque bipolaire de manière à former un module bipolaire d'un dispositif électrochimique, le dispositif électrochimique étant configuré pour mettre en œuvre une réaction électrochimique, le procédé de solidarisation étant réalisé au moyen du système de solidarisation tel que décrit précédemment, le procédé de solidarisation comprenant :
- une étape de soudage, au moins par l'organe de chauffage du premier dispositif d'assemblage, pendant une première durée prédéterminée de chauffage, l'étape de soudage étant réalisée selon une zone de chauffage périphérique sur la portion périphérique de la première plaque bipolaire de manière à former un cordon de soudage périphérique s'étendant extérieurement à la portion centrale et étant strictement inclus dans la portion périphérique de la première plaque bipolaire.

Le procédé selon l'invention permet avantageusement une solidarisation simple et rapide de deux plaques bipolaires pour former le module bipolaire. Le procédé permet de s'assurer de la solidarisation de deux plaques bipolaires tout en garantissant de conserver les caractéristiques de conductivité de la portion centrale active de chaque plaque bipolaire. Grâce à l'invention, la solidarisation de deux plaques bipolaires en matériau composite est également réalisée de manière fiable en s'assurant de l'étanchéité des canaux internes au module bipolaire. En outre, la solidarisation est réalisée sans ajout de matière, ce qui permet de limiter les coûts, de s'affranchir du positionnement précis d'un joint adhésif par exemple et de limiter le nombre d'étapes nécessaires à la formation du module bipolaire. Le procédé de solidarisation selon l'invention permet en outre de réduire de façon très importante la durée du soudage de deux plaques bipolaires, ce qui permet d'augmenter les cadences de production. Le procédé de solidarisation permet également de solidariser deux plaques bipolaires présentant chacune un unique état de surface, puisqu'il permet de s'affranchir de l'ajout de résine polymère sur la portion périphérique tout en s'assurant que celle-ci ne soit pas endommagée par l'état de chauffage.

De manière préférée, la première durée prédéterminée de chauffage est inférieure ou égale à 20 secondes, permettant de limiter le temps de chauffe et donc les risques d'une diffusion thermique importante dans les plaques bipolaires, pouvant générer des effets de déconsolidation du matériau composite sur des zones éloignées de la zone de soudure. Autrement dit, une telle première durée permet de limiter les risques d'endommagement de l'assemblage composite de chaque plaque bipolaire. Le procédé permet ainsi de conserver les caractéristiques de résistance mécanique d'une plaque bipolaire d'épaisseur fine comprenant des fibres de renfort imprégnées dans une résine polymère.

De préférence encore, la première durée prédéterminée de chauffage est inférieure 2 secondes.

Dans une forme de réalisation, le procédé comprend simultanément à l'étape de soudage, une étape de compression, par l'application, au moins par un organe de pression du premier dispositif d'assemblage, d'un premier effort de pression, le premier effort de pression étant appliqué selon une zone de pression au moins sur une partie de la portion périphérique de la première plaque bipolaire, de manière à comprimer la première plaque bipolaire et la deuxième plaque bipolaire. L'application de l'organe de pression permet de s'assurer que les plaques bipolaires restent immobiles pendant tout le procédé de solidarisation.

De préférence, le premier effort de pression est appliqué à la fois par l'organe de pression selon la zone de pression et par l'organe de chauffage selon la zone de chauffage.

De manière préférée, le procédé comprend, postérieurement à l'étape de soudage, une étape de refroidissement de l'organe de chauffage du premier dispositif d'assemblage, l'organe de pression maintenant le premier effort de pression selon la zone de pression.

De préférence, l'organe de pression du premier dispositif d'assemblage maintient le premier effort de pression selon la zone de pression pendant une deuxième durée prédéterminée de refroidissement. Le maintien du premier effort de pression permet de s'assurer de la solidification du cordon de soudure avant de retirer le premier dispositif d'assemblage, permettant ainsi de limiter les risques par exemple de glissement et donc de décalage d'une plaque bipolaire par rapport à l'autre ou de décollement des deux plaques bipolaires qui serait dû à une matrice composite non consolidée.

De préférence encore, l'organe de pression et l'organe de chauffage du premier dispositif d'assemblage maintiennent le premier effort de pression selon la zone de pression et selon la zone de chauffage pendant la deuxième durée prédéterminée de refroidissement.

Dans un mode de mise en œuvre, le premier dispositif d'assemblage comprenant un organe de refroidissement, configuré pour permettre la circulation d'un fluide caloporteur au moins sur l'organe de chauffage, l'étape de refroidissement correspond à la circulation du fluide caloporteur sur l'organe de chauffage du premier dispositif d'assemblage.

De manière préférée, la deuxième durée prédéterminée de refroidissement est inférieure ou égale à 60 secondes.

Dans un mode de mise en œuvre, les étapes de compression et de soudage sont réalisées simultanément par l'organe de chauffage du premier dispositif d'assemblage sur la portion périphérique de la première plaque bipolaire et par l'organe de chauffage du deuxième dispositif d'assemblage sur la portion périphérique de la deuxième plaque bipolaire. Ainsi la durée d'application des deux organes de chauffage est réduite.

De manière préférée, l'étape de compression par l'application d'un premier effort de pression est réalisée simultanément sur la portion périphérique de la première plaque bipolaire par l'organe de pression du premier dispositif d'assemblage et sur la portion périphérique de la deuxième plaque bipolaire par l'organe de pression du deuxième dispositif d'assemblage.

De manière préférée, la distance entre la zone de chauffage périphérique et la portion centrale de chaque plaque bipolaire est supérieure ou égale à 0,5mm. Une telle distance permet avantageusement de limiter le risque que l'organe de chauffage n'affecte la matrice polymère de la portion centrale et n'altère ainsi ses propriétés conductrices.

De préférence, la distance entre la zone de chauffage périphérique et la portion centrale de chaque plaque bipolaire est inférieure à 30mm. Une telle distance permet de solidariser deux plaques bipolaires dans la portion périphérique au plus proche de la portion centrale, ce qui présente l'avantage d'augmenter l'étanchéité dans le module bipolaire, permettant de limiter les risques de mélange des différents fluides dans le dispositif électrochimique.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La [Fig.1] est une représentation schématique d'un empilement de trois cellules et d'un module bipolaire d'un dispositif électrochimique.
La [Fig.2] est une représentation schématique d'une plaque bipolaire du module bipolaire de la [Fig.1].
La [Fig.3] est une représentation schématique d'une vue suivant un plan de coupe A : A de la plaque bipolaire de la [Fig.2].
La [Fig.4] est une représentation schématique d'une plaque bipolaire comprenant une portion centrale et une portion périphérique.
La [Fig.5] est une représentation schématique d'une vue suivant un plan de coupe B : B de la plaque bipolaire de la [Fig.4].
La [Fig.6] est une représentation schématique d'une vue de dessus de la plaque bipolaire de la [Fig.4].
La [Fig.7] est une représentation schématique d'une première forme de réalisation d'un système de solidarisation de deux plaques bipolaires selon l'invention.
La [Fig.8] est une représentation schématique d'une vue de dessous d'un premier dispositif d'assemblage du système de solidarisation de la [Fig.7].
La [Fig.9] est une représentation schématique d'une deuxième forme de réalisation d'un système de solidarisation de deux plaques bipolaires selon l'invention.
La [Fig.10] est une représentation schématique d'une vue de dessous d'un premier dispositif d'assemblage du système de solidarisation de la [Fig.9].
La [Fig.11] est une représentation schématique d'une troisième forme de réalisation d'un système de solidarisation de deux plaques bipolaires selon l'invention.
La [Fig.12] est une représentation schématique d'une vue de dessous d'un premier dispositif d'assemblage du système de solidarisation de la [Fig.11].
La [Fig.13] est une représentation schématique d'une vue rapprochée suivant un plan de coupe C : C du premier dispositif d'assemblage de la [Fig.12].
La [Fig.14] est une représentation schématique d'une vue rapprochée du système de solidarisation de la [Fig.11] selon une forme de réalisation pour l'assemblage de deux plaques bipolaires de la [Fig.4].
La [Fig.15] est une représentation schématique d'une vue rapprochée du système de solidarisation de la [Fig.11] selon une forme de réalisation alternative pour l'assemblage de deux plaques bipolaires de la [Fig.4].
Les figures 16 à 22 sont des représentations schématiques des étapes d'un procédé de solidarisation de deux plaques bipolaires selon l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un système de solidarisation de deux plaques bipolaires en matériau composite d'un dispositif électrochimique.

Par la suite, tel que décrit précédemment, le terme « dispositif électrochimique » désigne tout aussi bien une pile à combustible, un électrolyseur membranaire à échange de protons, une batterie à flux d'oxydo-réduction ou tout autre dispositif permettant de mettre en œuvre une réaction électrochimique.

Comme décrit précédemment, un dispositif électrochimique comprend un empilement d'une pluralité de cellules, comprenant chacune un assemblage membrane-électrodes et deux plaques bipolaires, également appelées plaques séparatrices, qui prennent en sandwich l'assemblage membrane-électrodes. Chaque cellule est alimentée en fluide caloporteur pour la régulation thermique du dispositif électrochimique. Pour cela, deux plaques bipolaires adjacentes de deux cellules adjacentes sont solidarisées ensemble de manière à former un module bipolaire définissant plusieurs canaux internes qui permettent le passage du fluide caloporteur entre les cellules.

L'invention vise un système de solidarisation de deux plaques bipolaires d'un module bipolaire pour garantir l'étanchéité des canaux internes qui permettent le passage du fluide caloporteur.

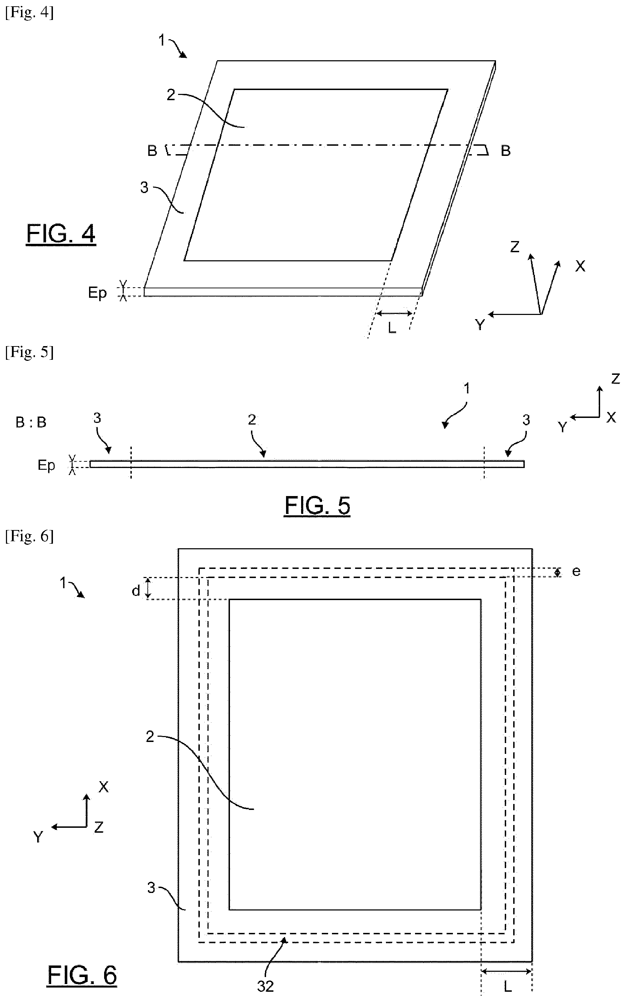

En référence à la [Fig.4], chaque plaque bipolaire 1 s'étend longitudinalement selon un axe X, latéralement selon un axe Y et verticalement selon un axe Z, de manière à former un repère orthogonal (X, Y, Z).

Selon l'invention, chaque plaque bipolaire 1 est fabriquée en matériau composite et comprend des fibres de renfort conductrices imprégnées dans une résine polymère. Dans une forme de réalisation préférée, chaque plaque bipolaire 1 comprend des fibres de carbone imprégnées dans une résine thermoplastique, formant une matrice polymère. Les fibres de carbone sont électriquement conductrices de manière à conduire les charges électriques nécessaires ou produites par la réaction d'oxydo-réduction dans le dispositif électrochimique.

En référence aux figures 4 à 6, chaque plaque bipolaire 1 comprend une portion centrale 2 et une portion périphérique 3, chaque portion étant électriquement conductrice. La portion centrale 2 est de préférence rectangulaire.

La plaque bipolaire 1 présente une épaisseur Ep comprise entre 0,1 et 1mm, définie selon l'axe vertical Z et représentée sur la [Fig.5] et permettant de conférer à la plaque bipolaire 1 une zone renforcée fine et légère. Ainsi la plaque bipolaire 1 est légère et peu encombrante dans le dispositif électrochimique. La plaque bipolaire 1 comprenant une pluralité de canaux pour permettre le passage de fluides, comme décrit précédemment, son épaisseur Ep peut être constante ou variable tout en étant inférieure à 1mm. De préférence, la portion centrale 2 et la portion périphérique 3 présentent la même épaisseur, inférieure à 1mm.

La portion centrale 2 est destinée à réaliser des échanges dans le dispositif électrochimique et comprend pour cela des fibres de renfort conductrices exposées en surface de manière à permettre une haute conductivité électrique.

La portion périphérique 3 s'étend extérieurement à la portion centrale 2 de manière à former le pourtour de la plaque bipolaire 1, comme cela est représenté sur la [Fig.4]. La portion périphérique 3 comprend des fibres de renfort imprégnées dans la résine polymère, de manière analogue à la portion centrale 2. La plaque bipolaire 1 comprend ainsi deux portions structurellement identiques et présente un unique état de surface. Le procédé de fabrication des plaques bipolaires est ainsi rapide et peu coûteux. La portion périphérique 3 comporte dans un exemple de réalisation un bord intérieur rectangulaire et un bord extérieur rectangulaire.

Dans une forme de réalisation préférée de l'invention, la portion périphérique 3 s'étend sur une largeur L (représentée sur les figures 4 et 6) de préférence comprise entre 3 et 100 mm, permettant une surface suffisante pour permettre le contact du système de solidarisation S.

Dans une forme de réalisation préférée, en référence à la [Fig.6], la portion périphérique 3 comprend une portion de soudage 32 correspondant à la portion qui sera en contact avec un organe de chauffage du système de solidarisation S, comme cela sera décrit plus en détails par la suite. Une telle portion de soudage 32 s'étend sur toute la portion périphérique 3 de la plaque bipolaire 1. Autrement dit, la portion de soudage 32 présente une forme périphérique. De préférence, la portion de soudage 32 s'étend sur une largeur e comprise entre 0,1 et 15mm, de préférence inférieure à 5mm.

En outre, la portion de soudage 32 est positionnée de préférence dans la portion périphérique 3 à une distance d comprise entre 0,5 et 30 mm, de préférence encore supérieure à 0,8 mm de la portion centrale 2. Une telle distance d permet avantageusement de limiter le risque que le système de solidarisation S n'affecte la matrice thermoplastique de la portion centrale 2 et n'altère ainsi ses propriétés conductrices.

Comme décrit précédemment, le système de solidarisation S selon l'invention permet de solidariser une première plaque bipolaire 1A et une deuxième plaque bipolaire 1B, pour former un module bipolaire M.

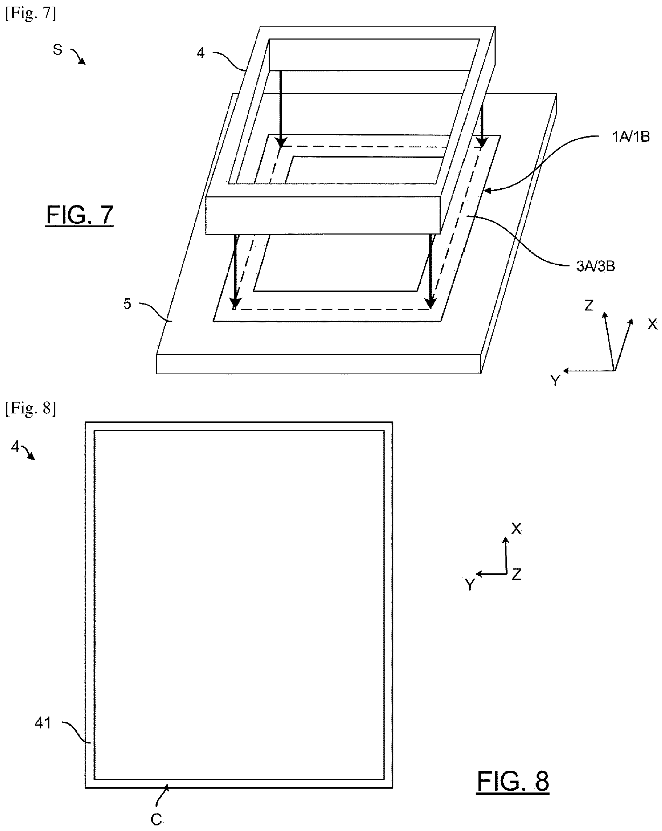

En référence à la [Fig.7], le système de solidarisation S selon l'invention comprend un premier dispositif d'assemblage 4 et un deuxième dispositif d'assemblage 5, monté en vis-à-vis du premier dispositif d'assemblage 4. Lors de la solidarisation des deux plaques bipolaires 1A, 1B, le premier dispositif d'assemblage 4 est configuré pour être en contact avec la première plaque bipolaire 1A (dans cet exemple la plaque supérieure) et le deuxième dispositif d'assemblage 5 pour être en contact avec la deuxième plaque bipolaire 1B (dans cet exemple la plaque inférieure).

En référence à la [Fig.8], présentant une vue en coupe du premier dispositif d'assemblage 4, ce dernier comprend un organe de chauffage 41, configuré pour permettre le soudage des deux plaques bipolaires 1A, 1B. L'organe de chauffage 41 permet de réaliser un chauffage selon une zone de chauffage C périphérique sur la portion périphérique 3A de la première plaque bipolaire 1A comme cela sera décrit plus en détails par la suite.

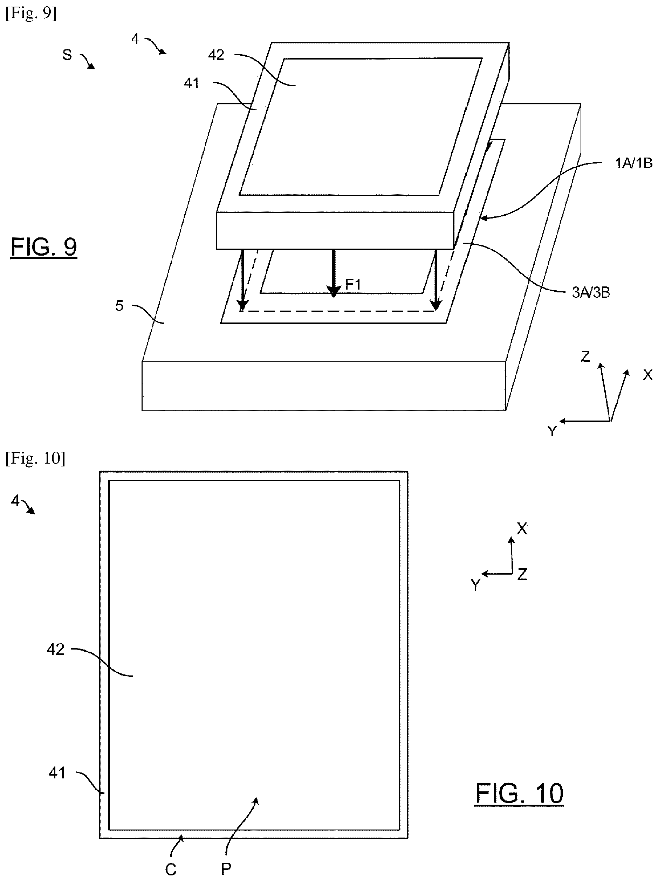

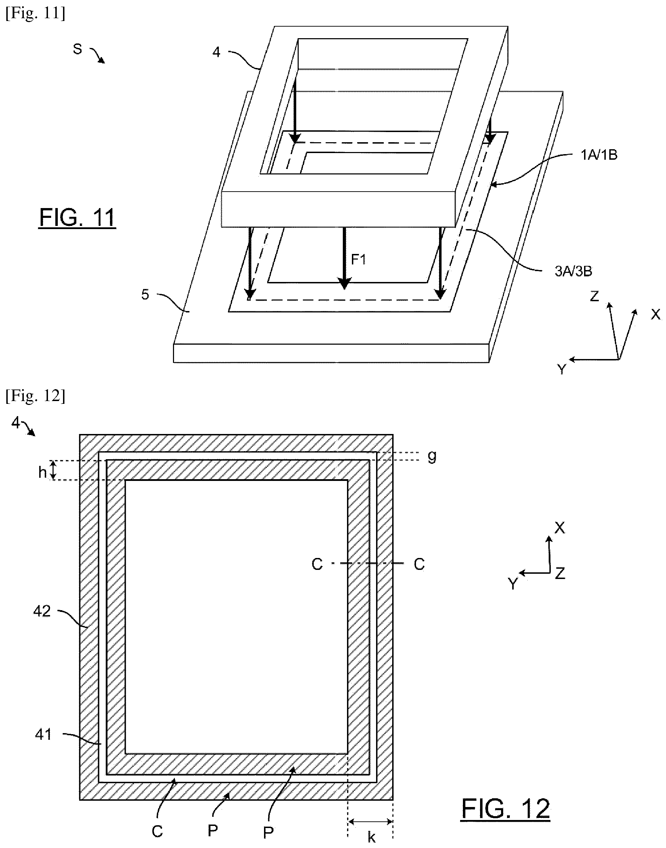

Dans une forme de réalisation préférée, en référence aux figures 9 à 12, le premier dispositif d'assemblage 4 comprend un organe de pression 42, configuré pour maintenir les deux plaques bipolaires 1A, 1B immobiles. L'organe de pression 42 est configuré pour appliquer un premier effort de pression F1 selon une zone de pression P (représentée sur les figures 10 et 12) au moins sur une partie de la portion périphérique 3A de la première plaque bipolaire 1A. Dans cette forme de réalisation, l'organe de chauffage 41 est monté sur l'organe de pression 42 et la zone de chauffage C est au voisinage de la zone de pression P.

Dans une forme de réalisation, l'organe de pression 42 et l'organe de chauffage 41 sont configurés pour appliquer simultanément le premier effort de pression F1.

De préférence, le premier effort de pression F1 est compris entre 1 et 15 MPa, de manière à éviter une pression trop importante qui pourrait entrainer le déplacement de matière hors de la portion de soudage.

Dans une forme de réalisation, représentée sur les figures 9 et 12, l'organe de pression 42 présente une forme parallélépipédique. La zone de pression P s'étend à la fois sur la portion centrale 2A et sur une partie de la portion périphérique 3A de la première plaque bipolaire 1A, et la zone de chauffage C périphérique s'étend sur la portion périphérique 3A de la première plaque bipolaire 1A extérieurement à la zone de pression P, comme représenté sur la [Fig.10].

Dans une forme de réalisation préférée, représentée sur les figures 11 et 12, l'organe de pression 42 présente une forme périphérique. L'organe de pression 42 est configuré pour appliquer le premier effort de pression F1 selon une zone de pression P s'étendant de manière périphérique sur la portion périphérique 3A de la première plaque bipolaire 1A, comme cela est représenté sur la [Fig.11]. De préférence encore, la zone de pression P est configurée pour s'étendre uniquement sur la portion périphérique 3A de la première plaque bipolaire 1A.

Dans cet exemple, l'organe de chauffage 41 est de préférence monté sur l'organe de pression 42. La zone de chauffage C est ainsi au voisinage de la zone de pression P. La zone de chauffage C s'étend intérieurement ou extérieurement à la zone de pression P. Dans une forme de réalisation préférée, représentée sur la [Fig.12], la zone de chauffage C est incluse dans la zone de pression P, comme cela sera décrit plus en détails par la suite.

Le système de solidarisation S est décrit par la suite selon cette dernière forme de réalisation préférée, dans laquelle le premier dispositif d'assemblage 4 comprend un organe de pression 42 et dans lequel la zone de chauffage C périphérique est strictement incluse dans la zone de pression P périphérique. Par la suite, le premier effort de pression F1 est appliqué simultanément à la fois par l'organe de pression 42 et par l'organe de chauffage 41. La zone de chauffage C et la zone de pression P forment alors une zone de pression commune.

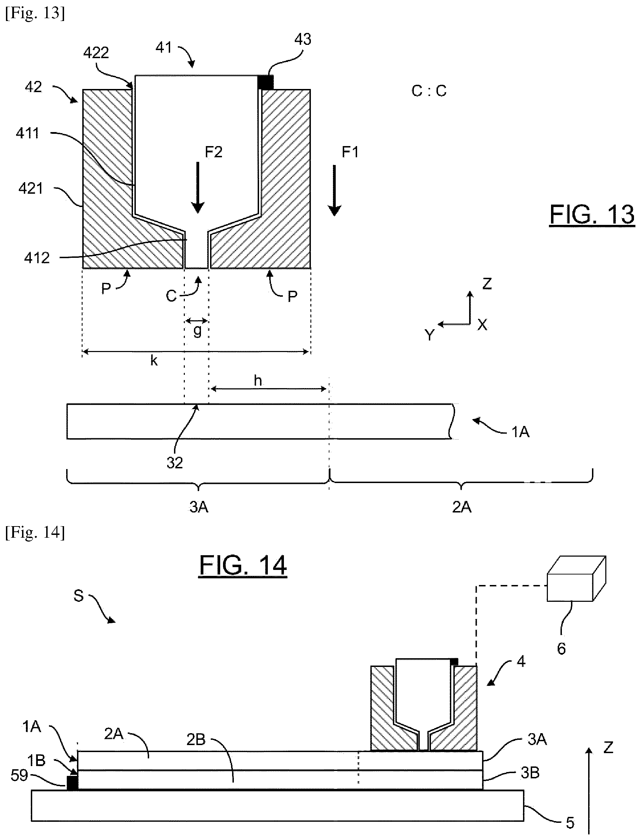

Dans cet exemple, en référence aux figures 12 et 13, l'organe de pression 42 comprend un corps principal 421 de forme périphérique et une cavité intérieure 422 s'étendant dans cet exemple verticalement dans tout l'organe de pression 42. Ce document présente l'exemple d'un organe de pression 42 selon une zone de pression P rectangulaire (comme représenté sur la [Fig.12]), cependant il va de soi que l'organe de pression 42 pourrait tout aussi bien présenter une forme périphérique différente, de manière à pouvoir être adapté à toute forme de plaque bipolaire 1 (circulaire, ovoïde, trapézoïdale ou même une forme plus complexe).

L'organe de pression 42 présente, dans cet exemple, sur toute la périphérie, une épaisseur k (représentée sur la [Fig.13]) comprise de préférence entre 10 et 100mm. Une telle épaisseur k permet avantageusement de s'assurer que l'organe de pression 42 applique le premier effort de pression F1 selon une zone de pression P périphérique présentant une surface suffisante pour maintenir les plaques bipolaires 1A, 1B en compression, tout en s'assurant que le premier effort de pression F1 n'est appliqué que sur la portion périphérique 3A de la première plaque bipolaire 1A.

L'organe de pression 42 est configuré pour être maintenu à une température de fonctionnement inférieure ou égale à la température de fusion de la résine polymère du matériau composite de chaque plaque bipolaire 1, abaissée de 20°C, afin de ne pas faire fondre la résine lors de la pression. Dans une première forme de réalisation, l'organe de pression 42 est réalisé dans un matériau thermiquement non conducteur, de manière à limiter le transfert de chaleur entre l'organe de chauffage 41 et l'organe de pression 42. A titre d'exemple, de manière non exhaustive, l'organe de pression 42 est réalisé dans un matériau thermoplastique tel que du polyétheréthercétone (PEEK), polysulfure de phénylène (PPS), polyéthercétone (PEK), Teflon ^{®}, ou dans un matériau composite organique, un matériau réfractaire inorganique, ou par usinage de MICA, graphite, céramiques. Dans une deuxième forme de réalisation, l'organe de pression 42 comprend un dispositif de refroidissement (non représenté), par exemple un circuit de refroidissement liquide ou gazeux intégré ou externe à l'organe de pression 42, pour réguler la température de fonctionnement de l'organe de pression 42 en la maintenant par exemple à la température ambiante. Un tel dispositif de refroidissement permet également de limiter le transfert de chaleur entre l'organe de chauffage 41 et l'organe de pression 42.

En référence à la [Fig.13], dans cet exemple, l'organe de chauffage 41 est monté dans la cavité intérieure 422 de l'organe de pression 42. Cela permet de réaliser un chauffage selon une zone de chauffage C qui est compressée de manière optimale comme cela sera présenté par la suite.

Dans un exemple de réalisation, l'organe de chauffage 41 est monté coulissant dans la cavité intérieure 422 de l'organe de pression 42, de manière à pouvoir être facilement éloigné et mis en contact avec la première plaque bipolaire 1A lors de la mise en œuvre du procédé de solidarisation.

De manière alternative, l'organe de chauffage 42 est solidaire de l'organe de pression 41, de manière à évoluer par rapport aux plaques bipolaires 1A, 1B, selon un mouvement commun.

De manière analogue à l'organe de pression 42, comme cela est représenté sur la [Fig.12], l'organe de chauffage 41 selon l'invention présente une forme périphérique et est configuré pour réaliser un chauffage selon une zone de chauffage C périphérique de manière à faire fondre la matrice polymère de la portion périphérique 3A de la première plaque bipolaire 1A et la matrice polymère de la portion périphérique 3B de la deuxième plaque bipolaire 1B pour solidariser la première plaque bipolaire 1A avec la deuxième plaque bipolaire 1B. De manière alternative, l'organe de chauffage 41 peut permettre de faire fondre uniquement la matrice polymère de la portion périphérique 3B de la deuxième plaque bipolaire 1B.

Dans cet exemple, la zone de chauffage C périphérique est strictement incluse dans la zone de pression P périphérique de manière à former sur le module bipolaire M un cordon de soudage périphérique s'étendant extérieurement à la portion centrale 2A et étant strictement inclus dans la portion périphérique 3A de la première plaque bipolaire 1A. Autrement dit, la zone de pression P de l'organe de pression 42 englobe la zone de chauffage C de l'organe de chauffage 41 de manière à comprimer localement la première plaque bipolaire 1A et la deuxième plaque bipolaire 1B de part et d'autre de l'organe de chauffage 41 autour de la zone de chauffage C.

En référence à la [Fig.13], l'organe de chauffage 41 comprend un corps principal 411 et une tête de soudage 412. La tête de soudage 412 forme la zone de chauffage C et est configurée pour venir en contact de la portion de soudage 32 de la portion périphérique 3A de la première plaque bipolaire 1A lors d'une opération de soudage, comme cela sera décrit plus en détail par la suite. L'organe de chauffage 41 est configuré pour appliquer le premier effort de pression F1 sur la portion de soudage 32 de la portion périphérique 3A de la première plaque bipolaire 1A, de manière analogue au premier organe de pression 41. La tête de soudage 412 présente de préférence une largeur g comprise entre 0,1 et 10mm, de préférence inférieure à 5mm. L'organe de chauffage 41 est de préférence centré par rapport à l'organe de pression 42 de manière à ce que la zone de chauffage C soit centrée dans la zone de pression P comme illustré sur les figures 12 et 13.

De préférence, l'organe de chauffage 41 est configuré pour réaliser un chauffage par exemple infra-rouge, ou par convection, radiation, induction, conduction ou vibration ultrasonique.

De manière préférée, l'organe de chauffage 41 est configuré pour être maintenu à une température comprise entre la température de fusion de la résine polymère et la température de dégradation de ladite résine polymère. Une telle température permet avantageusement de faire fondre localement la matrice polymère de la première plaque bipolaire 1A et de la deuxième plaque bipolaire 1B.

Dans une forme de réalisation préférée, l'organe de chauffage 41 est configuré pour appliquer sur la portion de soudage 32 de la portion périphérique 3A de la première plaque bipolaire 1A, un deuxième effort de pression F2, désigné effort de pression de soudage, compris entre 1 et 15MPa. Un tel deuxième effort de pression F2 permet de maintenir les plaques bipolaires 1A, 1B jointes pendant la phase de soudage, sans que l'effort de pression ne les endommage. Le deuxième effort de pression F2 permet également de minimiser les effets de déconsolidation dans chaque plaque bipolaire 1A, 1B liés à la fusion du polymère et au relâchement des contraintes résiduelles dans le matériau composite de chaque plaque bipolaire 1A, 1B. Cela permet en outre d'éviter un déplacement indésirable de la résine en dehors de la zone de soudage.

Dans une forme de réalisation, l'organe de chauffage 41 comprend un dispositif de positionnement 43 configuré pour venir en butée contre l'organe de pression 42 lorsque l'organe de chauffage 41 coulisse dans la cavité intérieure 422 de l'organe de pression 42. Le dispositif de positionnement 43 se présente par exemple sous la forme d'un épaulement faisant saillie latéralement de l'organe de chauffage 41. Un tel dispositif de positionnement 43 permet avantageusement de contrôler la position de l'organe de chauffage 41 par rapport à la première plaque bipolaire 1A durant l'opération de soudage. Autrement dit, lorsque l'organe de chauffage 41 coulisse dans la cavité intérieure 422 de l'organe de pression 42, le dispositif de positionnement 43 permet à l'organe de chauffage 41 de venir en contact avec la portion périphérique 3A de la première plaque bipolaire 1A et de pénétrer la première plaque bipolaire 1A, sans endommager les fibres de renfort et la résistance du matériau composite.

En référence à la [Fig.14], selon une première forme de réalisation, le deuxième dispositif d'assemblage 5 est monté en vis-à-vis du premier dispositif d'assemblage 4 et est configuré pour venir en contact de la deuxième plaque bipolaire 1B, de manière à permettre avec le premier dispositif d'assemblage 4 de comprimer simultanément la première plaque bipolaire 1A et la deuxième plaque bipolaire 1B.

Dans cet exemple, le deuxième dispositif d'assemblage 5 se présente sous la forme d'un support, configuré pour soutenir la deuxième plaque bipolaire 1B disposée sous la première plaque bipolaire 1A afin de résister à la pression appliquée par le premier dispositif d'assemblage 4. De préférence, le deuxième dispositif d'assemblage 5 comprend un ou plusieurs organes de centrage, par exemple des plots de positionnement 59 (représentés sur la [Fig.14]), permettant de positionner avec précision la première plaque bipolaire 1A en vis-à-vis de la deuxième plaque bipolaire 1B et de positionner également précisément l'ensemble formé par la première plaque bipolaire 1A et la deuxième plaque bipolaire 1B en vis-à-vis du premier dispositif d'assemblage 4.

Dans cette forme de réalisation, l'organe de chauffage 41 du premier dispositif d'assemblage 4 est configuré pour faire fondre l'épaisseur Ep de la portion périphérique 3A de la première plaque bipolaire 1A et l'épaisseur Ep de la portion périphérique 3B de la deuxième plaque bipolaire 1B. L'organe de chauffage 41 du premier dispositif d'assemblage 4 est alors configuré pour former le module bipolaire M.

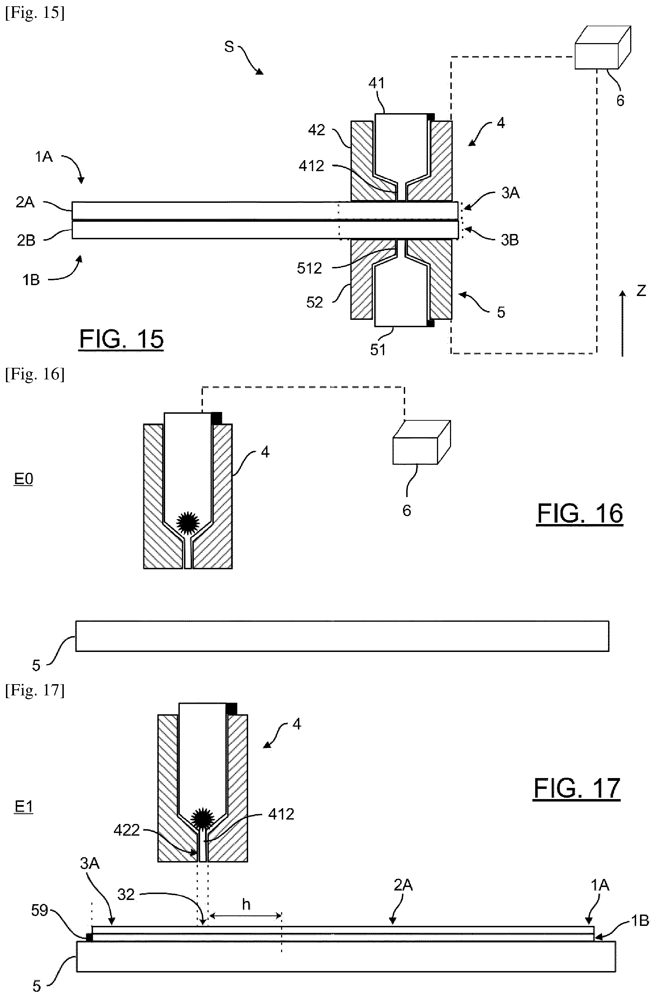

Les dispositifs d'assemblage 4, 5 du système de solidarisation S peuvent être différents, comme cela est représenté sur la [Fig.14], ou similaires, comme cela est représenté sur la [Fig.15].

Dans une deuxième forme de réalisation, représentée sur la [Fig.15], le deuxième dispositif d'assemblage 5 est similaire au premier dispositif d'assemblage 4. A ce titre, le deuxième dispositif d'assemblage 5 comprend un organe de chauffage 51, un organe de pression 52 et un organe de positionnement 53. L'organe de chauffage 51, l'organe de pression 52 et l'organe de positionnement 53 du deuxième dispositif d'assemblage 5 présentent dans ce cas la pluralité de caractéristiques décrites précédemment pour l'organe de chauffage 41, l'organe de pression 42 et l'organe de positionnement 43 du premier dispositif d'assemblage 4. Aussi ceux-ci ne seront pas décrits plus en détails.

Dans cette forme de réalisation, le premier dispositif d'assemblage 4 et le deuxième dispositif d'assemblage 5 sont montés de manière symétrique par rapport à la première plaque bipolaire 1A et à la deuxième plaque bipolaire 1B. Autrement dit, le premier dispositif d'assemblage 4 et le deuxième dispositif d'assemblage 5 sont configurés pour comprimer la première plaque bipolaire 1A et la deuxième plaque bipolaire 1B de part et d'autre entre l'organe de pression 42 du premier dispositif d'assemblage 4 et l'organe de pression 52 du deuxième dispositif d'assemblage 5, comme cela est représenté sur la [Fig.15].

La tête de soudage 512 du deuxième dispositif d'assemblage 5 est alors montée en vis-à-vis de la tête de soudage 412 du premier dispositif d'assemblage 4, de manière à faire fondre simultanément l'épaisseur Ep de la première plaque bipolaire 1A au moyen de la tête de soudage 412 du premier dispositif d'assemblage 4 et l'épaisseur Ep de la deuxième plaque bipolaire 1B au moyen de la tête de soudage 512 du deuxième dispositif d'assemblage 5, comme cela est représenté sur la [Fig.15]. Un chauffage simultané du premier organe de chauffage 41 et du deuxième organe de chauffage 51 sur les deux plaques bipolaires 1A, 1B permet avantageusement de réduire la durée d'application des organes de chauffage 41, 51 sur la portion périphérique 3A, 3B de chaque plaque bipolaire 1A, 1B.

De manière préférée, le système de solidarisation S comprend en outre un dispositif électronique 6 (représenté sur les figures 14 et 15), relié électriquement au premier dispositif d'assemblage 4 et au deuxième dispositif d'assemblage 5, lorsque celui-ci est similaire au premier dispositif d'assemblage 4. Un tel dispositif électronique 6 est configuré par exemple pour contrôler le premier effort de pression F1 de chaque organe de pression 42, 52 appliqué sur la première plaque bipolaire 1A et la deuxième plaque bipolaire 1B, ou bien encore commander la durée d'application de l'organe de chauffage 41, 51 sur la portion de soudage 32 des plaques bipolaires 1A, 1B. Dans le cas d'un organe de chauffage 41, 51 monté coulissant dans la cavité intérieure 422, 522 de chaque organe de pression 42, 52, le dispositif électronique 6 peut également être configuré pour contrôler un tel coulissement dans la cavité intérieure 422, 522 de chaque dispositif d'assemblage 4, 5.

Dans une forme de réalisation, le dispositif électronique 6 est en outre configuré pour contrôler la position de chaque organe de chauffage 41, 51 par rapport à l'organe de pression 42, 52 sur lequel il est monté, de manière à contrôler le deuxième effort de pression F2 appliqué par l'organe de chauffage 41, 51 sur la portion périphérique 3A, 3B de chaque plaque bipolaire 1A, 1B, sans nécessiter l'ajout de butée 43, 53.

Le système de solidarisation S selon l'invention permet simultanément un maintien sur toute la périphérie des plaques bipolaires 1A, 1B et un chauffage local permettant une refonte partielle de la matrice thermoplastique présente dans la portion périphérique 3A, 3B de chaque plaque bipolaire 1A, 1B, sans détériorer la portion centrale 2A, 2B de chacune. Un tel système de solidarisation S permet également de s'affranchir de l'ajout de matière supplémentaire lors de la formation du module bipolaire M, ce qui représente un gain de temps et limite le nombre d'étapes nécessaires à la formation du module bipolaire M. Le système de solidarisation S selon l'invention permet en outre la solidarisation de deux plaques bipolaires 1A, 1B comprenant des fibres de carbone imprégnées dans une résine polymère, sans nécessiter la formation, lors de la réalisation de chaque plaque bipolaire 1A, 1B, d'une couche résiduelle supplémentaire de résine polymère en périphérie de chaque bipolaire 1A, 1B et sans réaliser un quelconque traitement de surface, tel qu'un ponçage ou un polissage.

Il va dorénavant être décrit un procédé de solidarisation de deux plaques bipolaires 1A, 1B, de manière à former un module bipolaire M, en référence aux figures 16 à 21. Dans cet exemple, le système de solidarisation S comprend un premier dispositif d'assemblage 4 et un deuxième dispositif d'assemblage 5 différents, montés en vis-à-vis l'un de l'autre, de part et d'autre des deux plaques bipolaires 1A, 1B comme illustré à la [Fig.14]. Dans cet exemple, le premier dispositif d'assemblage 4 est monté verticalement suivant l'axe Z, c'est-à-dire de manière à ce que les deux plaques bipolaires 1A, 1B s'étendent horizontalement dans le plan (X, Y). Ce document présente l'exemple d'un procédé dans lequel le premier dispositif d'assemblage 4 et le deuxième dispositif d'assemblage 5 sont différents, cependant il va de soi que le premier dispositif d'assemblage 4 et le deuxième dispositif d'assemblage 5 pourraient être similaires. Dans ce cas, le premier dispositif d'assemblage 4 et le deuxième dispositif d'assemblage 5 seraient tous les deux montés verticalement suivant l'axe Z en vis-à-vis l'un de l'autre, de manière à aligner la tête de soudage 412 de l'organe de chauffage 41 du premier dispositif d'assemblage 4 et la tête de soudage 512 de l'organe de chauffage 51 du deuxième dispositif d'assemblage 5.

Le procédé de solidarisation est décrit pour l'exemple d'un système de solidarisation S dans lequel le premier dispositif d'assemblage 4 comprend un organe de chauffage 41 et un organe de pression 42 et le deuxième dispositif d'assemblage 5 se présente sous la forme d'un support plan. Le premier dispositif d'assemblage 4 est configuré pour appliquer un premier effort de pression F1 selon une zone de pression P périphérique uniquement sur la portion périphérique 3A de la première plaque bipolaire 1A et l'organe de chauffage 41 est configuré pour chauffer selon une zone de chauffage C strictement incluse dans la zone de pression P.

Le premier dispositif d'assemblage 4 est commandé, de préférence, par le dispositif électronique 6 auquel il est relié.

Le procédé comprend, en référence à la [Fig.16], une étape préliminaire E0 d'activation de l'organe de chauffage 41 du premier dispositif d'assemblage 4 pour lui permettre de monter en température. De préférence, l'organe de chauffage 41 chauffe jusqu'à atteindre une température de fonctionnement comprise entre la température de fusion de la résine polymère et la température de fusion augmentée de 40°C.

Le procédé comprend alors une première étape de positionnement E1 (représentée sur la [Fig.17]) de la première plaque bipolaire 1A et de la deuxième plaque bipolaire 1B sur le deuxième dispositif d'assemblage 5 formant un support. Pour cela, le deuxième dispositif d'assemblage 5 comprend dans cet exemple un plot de positionnement 59, permettant de positionner précisément la première plaque bipolaire 1A et la deuxième plaque bipolaire 1B sur le deuxième dispositif d'assemblage 5. Le plot de positionnement 59 permet ainsi de positionner la portion de soudage 32 de la portion périphérique 3A de la première plaque bipolaire 1A en vis-à-vis de la tête de soudage 412 de l'organe de chauffage 41 du premier dispositif d'assemblage 4.

Plus précisément, comme illustré à la [Fig.17], les plaques bipolaires 1A, 1B sont positionnées de préférence de manière à placer la cavité intérieure 422 de l'organe de pression 42 (et de manière incidente la tête de soudage 412 de l'organe de chauffage 41) à une distance h comprise entre 0,5 et 30 mm de la portion centrale 2A de la première plaque bipolaire 1A. Un tel positionnement permet avantageusement de limiter les risques de chauffage de la portion centrale 2A de chaque plaque bipolaire 1A, 1B permettant ainsi de limiter les risques de faire fondre la matrice thermoplastique de chaque portion centrale 2A, 2B pendant la solidarisation des deux plaques bipolaires 1A, 1B. Ainsi les propriétés conductrices de chaque portion centrale 2A, 2B ne sont pas altérées et les risques liés à la déconsolidation de chaque plaque bipolaire 1A, 1B en composite sont minimisés.

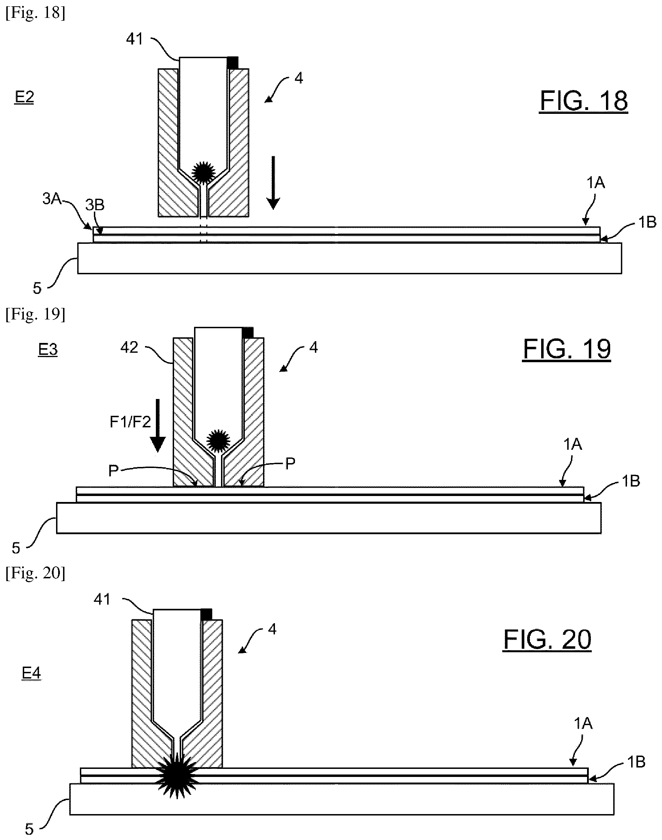

En référence à la [Fig.18], lorsque l'organe de chauffage 41 a atteint la température de fonctionnement et que les deux plaques bipolaires 1A, 1B sont positionnées, le premier dispositif d'assemblage 4 descend alors verticalement, dans une étape E2, jusqu'à venir en contact avec la portion périphérique 3A de la première plaque bipolaire 1A.

Le procédé comprend alors une étape de compression E3, représentée sur la [Fig.19], au cours de laquelle l'organe de pression 42 du premier dispositif d'assemblage 4 applique un premier effort de pression F1, puis un deuxième effort de pression F2, selon la zone de pression P périphérique et selon la zone de chauffage C contre la plaque bipolaire 1A de manière à compresser et maintenir immobiles la première plaque bipolaire 1A et la deuxième plaque bipolaire 1B contre le deuxième dispositif d'assemblage 5. Autrement dit, les deux plaques bipolaires 1A, 1B sont compressées au moins en partie sur leur portion périphérique 3A, 3B entre l'organe de pression 42 du premier dispositif d'assemblage 4 et le deuxième dispositif d'assemblage 5. Lors de l'étape de compression E2, l'organe de chauffage 41 est compressé contre les plaques bipolaires 1A, 1B.

Le procédé comprend alors simultanément à l'étape de compression E3, une étape de soudage E4, représentée sur la [Fig.20], dans laquelle l'organe de chauffage 41 du premier dispositif d'assemblage 4 chauffe selon la zone de chauffage C périphérique de manière à faire fondre la matrice polymère de chaque plaque bipolaire 1A, 1B pour solidariser la première plaque bipolaire 1A avec la deuxième plaque bipolaire 1B et former le module bipolaire M.

Dans un mode de mise en œuvre préféré, l'organe de chauffage 41 chaud est compressé pendant une première durée prédéterminée de soudage inférieure ou égale à 20 secondes, de manière à faire fondre la résine polymère pour souder les plaques bipolaires 1A, 1B sans déconsolider l'assemblage thermoplastique de chacune, ce qui pourrait l'endommager.

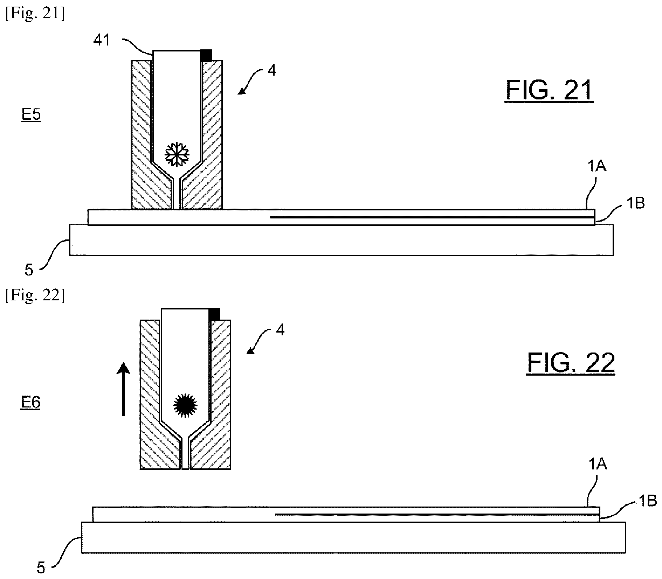

Après la première durée prédéterminée de chauffage, en référence à la [Fig.21], le procédé comprend une étape de refroidissement E5 de l'organe de chauffage 41 du premier dispositif d'assemblage 4. Pour cela, dans cet exemple, un fluide caloporteur est injecté autour de l'organe de chauffage 41 de manière à abaisser sa température. La portion de soudage 32 de chaque plaque bipolaire 1A, 1B refroidit alors pendant une deuxième durée prédéterminée de refroidissement au cours de laquelle l'organe de chauffage 41 et l'organe de pression 42 maintiennent le deuxième effort de pression F2. La deuxième durée prédéterminée est de préférence inférieure ou égale à 60 secondes, de manière à permettre la consolidation du cordon de soudure formé par l'organe de chauffage 41.

En référence à la [Fig.22], après la deuxième durée prédéterminée de refroidissement, au cours d'une étape de retrait E6, l'organe de chauffage 41 et l'organe de pression 42 sont déplacés de manière inverse à l'étape E2, de manière à ne plus compresser les plaques bipolaires 1A, 1B. Après le retrait de l'organe de chauffage 41, la circulation du fluide caloporteur est arrêtée, de manière à stopper son refroidissement. La température de l'organe de chauffage 41 remonte alors en prévision du soudage de deux nouvelles plaques bipolaires.

Un tel procédé de solidarisation permet avantageusement un soudage simple et rapide de deux plaques bipolaires pour former le module bipolaire. Le procédé selon l'invention permet de s'assurer du soudage de deux plaques bipolaires tout en garantissant de conserver les caractéristiques de conductivité de la portion centrale de chaque plaque bipolaire comprenant des fibres de renfort imprégnées dans une résine polymère. Grâce à l'invention, le soudage de deux plaques bipolaires telles que décrites dans ce document est également réalisé de manière fiable en s'assurant de l'étanchéité des canaux internes au module bipolaire. En outre, le soudage est réalisé sans ajout de matière, ce qui permet de s'affranchir du positionnement précis de joint adhésif par exemple et limite le nombre d'étapes nécessaires à la formation du module bipolaire. Le procédé de solidarisation selon l'invention permet en outre de réduire de façon très importante la durée du soudage de deux plaques bipolaires. Le procédé de solidarisation selon l'invention permet avantageusement la solidarisation de deux plaques bipolaires fabriquées en fibres de renfort imprégnées dans une résine thermoplastique et présentant un même état de surface sur toute la plaque bipolaire (portion centrale et portion périphérique). Il n'est ainsi plus nécessaire de former une couche résiduelle de matrice polymère en surface de la portion périphérique de chaque plaque bipolaire en vue de leur solidarisation.

## Revendications

1. Système de solidarisation (S) d'une première plaque bipolaire (1A) et d'une deuxième plaque bipolaire (1B) de manière à former un module bipolaire (M) d'un dispositif électrochimique, le dispositif électrochimique étant configuré pour mettre en œuvre une réaction électrochimique, chaque plaque bipolaire (1A, 1B) étant réalisée dans un matériau composite comprenant des fibres de renfort conductrices imprégnées dans une résine polymère, chaque plaque bipolaire (1A, 1B) comprenant :
• une portion centrale (2A, 2B), électriquement conductrice, destinée à réaliser des échanges dans le dispositif électrochimique, et
• une portion périphérique (3A, 3B), électriquement conductrice, s'étendant extérieurement à la portion centrale (2A, 2B),
• le système de solidarisation (S) comprenant :
• un premier dispositif d'assemblage (4) configuré pour être en contact avec la première plaque bipolaire (1A), et
• un deuxième dispositif d'assemblage (5) configuré pour être en contact avec la deuxième plaque bipolaire (1B),
• le premier dispositif d'assemblage (4) comprenant un organe de chauffage (41) ayant une forme périphérique et configuré pour réaliser un chauffage selon une zone de chauffage (C) périphérique sur la portion périphérique (3A) de la première plaque bipolaire (1A) de manière à faire fondre la matrice pour solidariser la première plaque bipolaire (1A) avec la deuxième plaque bipolaire (1B) et former un cordon de soudage périphérique s'étendant extérieurement à la portion centrale (2A) et étant strictement inclus dans la portion périphérique (3A) de la première plaque bipolaire (1A).

2. Système de solidarisation (S) selon la revendication 1, dans lequel le premier dispositif d'assemblage (4) comprend un organe de pression (42) configuré pour appliquer un premier effort de pression (F1) selon une zone de pression (P) au moins sur une partie de la portion périphérique (3A) de la première plaque bipolaire (1A) de manière à comprimer la première plaque bipolaire (1A) et la deuxième plaque bipolaire (1B) entre le premier dispositif d'assemblage (4) et le deuxième dispositif d'assemblage (5), l'organe de chauffage (41) étant monté sur l'organe de pression (42), la zone de chauffage (C) étant au voisinage de la zone de pression (P).

3. Système de solidarisation (S) selon la revendication 2, dans lequel, l'organe de pression (42) présentant une forme périphérique, la zone de pression (P) s'étend de manière périphérique uniquement sur la portion périphérique (3A) de la première plaque bipolaire (1A), et la zone de chauffage (C) périphérique est strictement incluse dans la zone de pression (P) périphérique.

4. Système de solidarisation (S) selon l'une des revendications 2 et 3, dans lequel, l'organe de pression (42) du premier dispositif d'assemblage (4) comprenant une cavité intérieure (422), l'organe de chauffage (41) du premier dispositif d'assemblage (4) est monté dans la cavité intérieure (422) de l'organe de pression (42).

5. Système de solidarisation (S) selon l'une des revendications 1 à 4, dans lequel l'organe de chauffage (41) comprenant une tête de soudage (412), la tête de soudage (412) présente une section (g) inférieure ou égale à 5mm.

6. Système de solidarisation (S) selon l'une des revendications 1 à 5, dans lequel au moins l'organe de chauffage (41) est configuré pour appliquer un deuxième effort de pression (F2) compris entre 1 et 15MPa selon la zone de chauffage (C) périphérique.

7. Procédé de solidarisation d'une première plaque bipolaire (1A) et d'une deuxième plaque bipolaire (1B) de manière à former un module bipolaire (M) d'un dispositif électrochimique, le dispositif électrochimique étant configuré pour mettre en œuvre une réaction électrochimique, le procédé de solidarisation étant réalisé au moyen du système de solidarisation (S) selon l'une des revendications 1 à 6, le procédé de solidarisation comprenant :
• une étape de soudage (E4), au moins par l'organe de chauffage (41) du premier dispositif d'assemblage (4), pendant une première durée prédéterminée de chauffage, l'étape de soudage (E4) étant réalisée selon une zone de chauffage (C) périphérique sur la portion périphérique (3A) de la première plaque bipolaire (1A) de manière à former un cordon de soudage périphérique s'étendant extérieurement à la portion centrale (2A) et étant strictement inclus dans la portion périphérique (3A) de la première plaque bipolaire (1A).

8. Procédé de solidarisation selon la revendication 7, comprenant simultanément à l'étape de soudage (E4), une étape de compression (E3), par l'application au moins par un organe de pression (42) du premier dispositif d'assemblage (4), d'un premier effort de pression (F1), le premier effort de pression (F1) étant appliqué selon une zone de pression (P) au moins sur une partie de la portion périphérique (3A) de la première plaque bipolaire (1A), de manière à comprimer la première plaque bipolaire (1A) et la deuxième plaque bipolaire (1B).

9. Procédé de solidarisation selon la revendication 8, comprenant postérieurement à l'étape de soudage (E4), une étape de refroidissement (E5) de l'organe de chauffage (41) du premier dispositif d'assemblage (4), l'organe de pression (42) maintenant le premier effort de pression (F1) selon la zone de pression (P).

10. Procédé de solidarisation selon la revendication 9, dans lequel, l'organe de pression (42) du premier dispositif d'assemblage (4) maintient le premier effort de pression (F1) selon la zone de pression (P) pendant une deuxième durée prédéterminée de refroidissement.

11. Procédé de solidarisation selon la revendication 10, dans lequel la deuxième durée prédéterminée de refroidissement est inférieure ou égale à 60 secondes.

12. Procédé de solidarisation selon l'une des revendications 7 à 11, dans lequel la distance entre la zone de chauffage (C) périphérique et la portion centrale (2A, 2B) de chaque plaque bipolaire (1A, 1B) est supérieure ou égale à 0,5mm.

13. Procédé de solidarisation selon l'une des revendications 7 à 12, dans lequel la première durée prédéterminée de chauffage est inférieure ou égale à 20 secondes.

## Patentansprüche

1. System zum Zusammenfügen (S) einer ersten Bipolarplatte (1A) und einer zweiten Bipolarplatte (1B) derart, dass ein Bipolarmodul (M) einer elektrochemischen Vorrichtung gebildet wird, wobei die elektrochemische Vorrichtung für die Durchführung einer elektrochemischen Reaktion ausgelegt ist, wobei jede Bipolarplatte (1A, 1B) aus einem Verbundmaterial hergestellt ist, das in einem Polymerharz imprägnierte leitende Verstärkungsfasern umfasst, wobei jede Bipolarplatte (1A, 1B) umfasst:
• einen elektrisch leitenden mittleren Abschnitt (2A, 2B), der zur Durchführung des Austauschs in der elektrochemischen Vorrichtung bestimmt ist, und
• einen elektrisch leitenden Umfangsabschnitt (3A, 3B), der sich außerhalb des mittleren Abschnitts (2A, 2B) erstreckt,
• wobei das System zum Zusammenfügen (S) umfasst:
• eine erste Verbindungsvorrichtung (4), die ausgelegt ist, um mit der ersten Bipolarplatte (1A) in Kontakt zu stehen, und
• eine zweite Verbindungsvorrichtung (5), die ausgelegt ist, um mit der zweiten Bipolarplatte (1B) in Kontakt zu stehen,
• wobei die erste Verbindungsvorrichtung (4) ein Heizelement (41) umfasst, das eine Umfangsform aufweist und ausgelegt ist, um eine Erwärmung entlang eines peripheren Heizbereichs (C) am Umfangsabschnitt (3A) der ersten Bipolarplatte (1A) durchzuführen, um die Matrix zu schmelzen, um die erste Bipolarplatte (1A) mit der zweiten Bipolarplatte (1B) zusammenzufügen und eine periphere Schweißnaht zu bilden, die sich außerhalb des mittleren Abschnitts (2A) erstreckt und strikt im Umfangsabschnitt (3A) der ersten Bipolarplatte (1A) enthalten ist.

2. System zum Zusammenfügen (S) nach Anspruch 1, wobei die erste Verbindungsvorrichtung (4) ein Druckelement (42) umfasst, das ausgelegt ist, um eine erste Druckkraft (F1) in einem Druckbereich (P) zumindest auf einen Teil des Umfangsabschnitts (3A) der ersten Bipolarplatte (1A) derart auszuüben, dass die erste Bipolarplatte (1A) und die zweite Bipolarplatte (1B) zwischen der ersten Verbindungsvorrichtung (4) und der zweiten Verbindungsvorrichtung (5) komprimiert werden, wobei das Heizelement (41) an dem Druckelement (42) angebracht ist, wobei sich der Heizbereich (C) in der Nähe des Druckbereichs (P) befindet.

3. System zum Zusammenfügen (S) nach Anspruch 2, wobei, wenn das Druckelement (42) eine Umfangsform aufweist, sich der Druckbereich (P) nur am Umfangsabschnitt (3A) der ersten Bipolarplatte (1A) peripher erstreckt und der periphere Heizbereich (C) strikt im peripheren Druckbereich (P) enthalten ist.

4. System zum Zusammenfügen (S) nach einem der Ansprüche 2 und 3, wobei, wenn das Druckelement (42) der ersten Verbindungsvorrichtung (4) einen Innenhohlraum (422) aufweist, das Heizelement (41) der ersten Verbindungsvorrichtung (4) im Innenhohlraum (422) des Druckelements (42) angebracht ist.

5. System zum Zusammenfügen (S) nach einem der Ansprüche 1 bis **4,** wobei, wenn das Heizelement (41) einen Schweißkopf (412) umfasst, der Schweißkopf (412) einen Querschnitt (g) von weniger als oder gleich 5 mm aufweist.

6. System zum Zusammenfügen (S) nach einem der Ansprüche 1 bis 5, wobei mindestens das Heizelement (41) ausgelegt ist, um eine zweite Druckkraft (F2) zwischen 1 und 15 MPa entsprechend dem peripheren Heizbereich (C) auszuüben.

7. Verfahren zum Zusammenfügen einer ersten Bipolarplatte (1A) und einer zweiten Bipolarplatte (1B) derart, dass ein Bipolarmodul (M) einer elektrochemischen Vorrichtung gebildet wird, wobei die elektrochemische Vorrichtung zur Durchführung einer elektrochemischen Reaktion ausgelegt ist, wobei das Verfahren zum Zusammenfügen mittels des Systems zum Zusammenfügen (S) nach einem der Ansprüche 1 bis 6 durchgeführt wird, wobei das Verfahren zum Zusammenfügen umfasst:
• einen Schweißschritt (E4), zumindest durch das Heizelement (41) der ersten Verbindungsvorrichtung (4), während einer ersten vorbestimmten Heizdauer, wobei der Schweißschritt (E4) in einem peripheren Heizbereich (C) auf dem Umfangsabschnitt (3A) der ersten Bipolarplatte (1A) derart durchgeführt wird, dass eine periphere Schweißnaht gebildet wird, die sich außerhalb des mittleren Abschnitts (2A) erstreckt und strikt im Umfangsabschnitt (3A) der ersten Bipolarplatte (1A) enthalten ist.

8. Verfahren zum Zusammenfügen nach Anspruch 7, das gleichzeitig mit dem Schweißschritt (E4) einen Kompressionsschritt (E3) durch Anwenden einer ersten Druckkraft (F1) durch mindestens ein Druckelement (42) der ersten Verbindungsvorrichtung (4) umfasst, wobei die erste Druckkraft (F1) in einem Druckbereich (P) zumindest auf einen Teil des Umfangsabschnitts (3A) der ersten Bipolarplatte (1A) derart ausgeübt wird, dass die erste Bipolareplatte (1A) und die zweite Bipolarplatte (1B) komprimiert werden.

9. Verfahren zum Zusammenfügen nach Anspruch 8, das nach dem Schweißschritt (E4) einen Abkühlschritt (E5) des Heizelements (41) der ersten Verbindungsvorrichtung (4) umfasst, wobei das Druckelement (42) die erste Druckkraft (F1) im Druckbereich (P) aufrechterhält.

10. Verfahren zum Zusammenfügen nach Anspruch 9, wobei das Druckelement (42) der ersten Verbindungsvorrichtung (4) die erste Druckkraft (F1) im Druckbereich (P) während einer zweiten vorbestimmten Abkühlzeit aufrechterhält.

11. Verfahren zum Zusammenfügen nach Anspruch 10, wobei die zweite vorbestimmte Abkühlzeit weniger als oder gleich 60 Sekunden beträgt.

12. Verfahren zum Zusammenfügen nach einem der Ansprüche 7 bis 11, wobei der Abstand zwischen dem peripheren Heizbereich (C) und dem mittleren Abschnitt (2A, 2B) jeder Bipolarplatte (1A, 1B) größer oder gleich 0,5 mm ist.

13. Verfahren zum Zusammenfügen nach einem der Ansprüche 7 bis 12, wobei die erste vorbestimmte Heizdauer kleiner oder gleich 20 Sekunden ist.

## Claims

1. A system (S) for securing a first bipolar plate (1A) and a second bipolar plate (1B) so as to form a bipolar module (M) of an electrochemical device, the electrochemical device being configured to carry out an electrochemical reaction, each bipolar plate (1A, 1B) being made of a composite material comprising conductive reinforcing fibers impregnated with a polymer resin, each bipolar plate (1A, 1B) comprising:
• an electrically conductive central portion (2A, 2B) for carrying out exchanges in the electrochemical device, and
• an electrically conductive peripheral portion (3A, 3B) extending outside the central portion (2A, 2B),
• the securing system (S) comprising:
• a first assembly device (4) configured to be in contact with the first bipolar plate (1A), and
• a second assembly device (5) configured to be in contact with the second bipolar plate (1B),
• the first assembly device (4) comprising a heating member (41) comprising a peripheral shape and configured to perform heating according to a peripheral heating zone (C) on the peripheral portion (3A) of the first bipolar plate (1A) so as to melt the matrix to bond the first bipolar plate (1A) to the second bipolar plate (1B) and form a peripheral weld bead extending outside the central portion (2A) and being strictly included within the peripheral portion (3A) of the first bipolar plate (1A).

2. The securing system (S) according to claim 1, wherein the first assembly device (4) comprises a pressure member (42) configured to apply a first pressure force (F1) in a pressure zone (P) at least on a part of the peripheral portion (3A) of the first bipolar plate (1A) so as to compress the first bipolar plate (1A) and the second bipolar plate (1B) between the first assembly device (4) and the second assembly device (5), the heating member (41) being mounted on the pressure member (42), the heating zone (C) being in the vicinity of the pressure zone (P).

3. The securing system (S) according to claim 2, wherein the pressure member (42) having a peripheral shape, the pressure zone (P) extends peripherally only over the peripheral portion (3A) of the first bipolar plate (1A), and the peripheral heating zone (C) is strictly included within the peripheral pressure zone (P).

4. The securing system (S) according to one of claims 2 and 3, wherein the pressure member (42) of the first assembly device (4) comprising an inner cavity (422), the heating member (41) of the first assembly device (4) is mounted in the inner cavity (422) of the pressure member (42).

5. The securing system (S) according to one of claims 1 to 4, wherein the heating member (41) comprising a welding head (412), the welding head (412) has a cross-section (g) less than or equal to 5 mm.

6. The securing system (S) according to one of claims 1 to 5, wherein at least the heating member (41) is configured to apply a second pressure force (F2) of between 1 and 15 MPa depending on the peripheral heating zone (C).

7. A method for securing a first bipolar plate (1A) and a second bipolar plate (1B) so as to form a bipolar module (M) of an electrochemical device, the electrochemical device being configured to carry out an electrochemical reaction, the securing method being carried out by means of the securing system (S) according to one of claims 1 to 6, the securing method comprising:
• a welding step (E4), at least by the heating member (41) of the first assembly device (4), for a first predetermined heating time, the welding step (E4) being performed in a peripheral heating zone (C) on the peripheral portion (3A) of the first bipolar plate (1A) so as to form a peripheral weld bead extending outside the central portion (2A) and being strictly included in the peripheral portion (3A) of the first bipolar plate (1A).

8. The securing method according to claim 7, comprising simultaneously with the welding step (E4), a compression step (E3), by applying, at least by a pressure member (42) of the first assembly device (4), a first pressure force (F1), the first pressure force (F1) being applied in a pressure zone (P) to at least part of the peripheral portion (3A) of the first bipolar plate (1A), so as to compress the first bipolar plate (1A) and the second bipolar plate (1B).

9. The securing method according to claim 8, comprising, after the welding step (E4), a cooling step (E5) for cooling the heating member (41) of the first assembly device (4), the pressure member (42) maintaining the first pressure force (F1) on the pressure zone (P).

10. The securing method according to claim 9, wherein the pressure member (42) of the first assembly device (4) maintains the first pressure force (F1) in the pressure zone (P) for a second predetermined cooling time.

11. The securing method according to claim 10, wherein the second predetermined cooling time is less than or equal to 60 seconds.

12. The securing method according to one of claims 7 to 11, wherein the distance between the peripheral heating zone (C) and the central portion (2A, 2B) of each bipolar plate (1A, 1B) is greater than or equal to 0.5 mm.

13. The securing method according to any one of claims 7 to 12, wherein the first predetermined heating time is less than or equal to 20 seconds.
